# EUROPÄISCHE PATENTANMELDUNG

(11) **EP 1 188 708 A2**
(43) Veröffentlichungstag der Anmeldung: **20.03.2002**
(21) Anmeldenummer: 01121832.8
(22) Anmeldetag: 11.09.2001
(51) Int. Cl.: B66F 9/075

(54) **Hydrostatischer Fahrantrieb**

(30) Priorität: 18.09.2000 DE 10045999
(71) Anmelder: STILL GMBH, D-22113 Hamburg (DE)
(72) Erfinder: Macit, Recep, 40025 Düsseldorf (DE)
(74) Vertreter: Geirhos, Johann

(57) **Zusammenfassung**

Die Erfindung betrifft einen hydrostatischer Fahrantrieb (1) für eine batterie-elektrisch betriebene Arbeitsmaschine, insbesondere Flurförderzeug, mit zumindest einem mit einem Antriebsrad (3) der Arbeitsmaschine in Wirkverbindung stehenden rotatorischen Verbraucher (2), der im offenen Kreislauf mit einem hydraulischen Aggregat (4) in Verbindung steht, wobei das hydraulische Aggregat (4) mit einer elektrischen Maschine (5) in trieblicher Verbindung steht. Die Aufgabe, einen Fahrantrieb zur Verfügung zu stellen, der eine längere Betriebsdauer der Arbeitsmaschine mit einer Batterieladung ermöglicht, wird erfindungsgemäß dadurch gelöst, dass im Bremsbetrieb des Fahrantriebs (1) die Ablaufseite (12a; 12b) des Verbrauchers (2) mit der Eingangsseite (6) des hydraulischen Aggregats (4) in Verbindung bringbar ist, wobei die elektrische Maschine (5) als Generator betreibbar ist. Gemäß einer Ausgestaltungsform ist die Ausgangsseite (9) des hydraulischen Aggregats (4) mittels einer Steuerventileinrichtung (15) mit der Zulaufseite (12a; 12b) und die Ablaufseite (12b; 12a) des Verbrauchers (2) mittels einer Schaltventileinrichtung (21) im Fahrbetrieb mit einem Behälter (7) und im Bremsbetrieb mit der Eingangsseite (6) des hydraulischen Aggregats (4) in Verbindung bringbar.

## Beschreibung

Die Erfindung betrifft einen hydrostatischer Fahrantrieb für eine batterie-elektrisch betriebene Arbeitsmaschine, insbesondere Flurförderzeug, mit zumindest einem mit einem Antriebsrad der Arbeitsmaschine in Wirkverbindung stehenden rotatorischen Verbraucher, der im offenen Kreislauf mit einem hydraulischen Aggregat in Verbindung steht, wobei das hydraulische Aggregat mit einer elektrischen Maschine in trieblicher Verbindung steht.

Bei bekannten hydrostatischen Fahrantrieben für Arbeitsmaschinen, beispielsweise Flurförderzeugen, mit einer von einer Batterie gespeisten elektrischen Maschine, die ein hydraulisches Aggregat antreibt, an das ein Verbraucher im offenen Kreislauf angeschlossen ist, ergibt sich eine begrenzte Betriebsdauer mit einer Batterieladung, da bei einem im offenen Kreislauf betriebenen Verbraucher, der das Antriebsrad antreibt, im Bremsbetrieb das dem Verbraucher abströmende Druckmittel über ein Bremsventil zum Behälter abströmt.

Der vorliegenden Erfindung liegt die Aufgabe zugrunde, einen Fahrantrieb der eingangs genanten Art zur Verfügung zu stellen, der eine längere Betriebsdauer der Arbeitsmaschine mit einer Batterieladung ermöglicht.

Diese Aufgabe wird erfindungsgemäß dadurch gelöst, dass im Bremsbetrieb des Fahrantriebs die Ablaufseite des Verbrauchers mit der Eingangsseite des hydraulischen Aggregats in Verbindung bringbar ist, wobei die elektrische Maschine als Generator betreibbar ist.

Erfindungsgemäß wird somit im Bremsbetrieb das dem Verbraucher abströmende Druckmittel zum hydraulischen Aggregat geführt, das als Motor arbeitet und die als Generator arbeitende elektrische Maschine antreibt. Im Bremsbetrieb des Arbeitsfahrzeugs kann somit die kinetische Energie der Arbeitsmaschine in elektrische Energie umgewandelt und in die Batterie eingespeist werden. Durch die Energierückgewinnung im Bremsbetrieb ergibt sich hierbei eine längere Betriebsdauer einer Batterieladung, wodurch die Arbeitsmaschine mit einer Batterieladung eine höhere Umschlagleistung aufweist und die Intervalle zum Wiederaufladen der Batterie verlängert werden können.

Gemäß einer Ausführungsform der Erfindung ist die Ausgangsseite des hydraulischen Aggregats mittels einer Steuerventileinrichtung mit der Zulaufseite des Verbrauchers und die Ablaufseite des Verbrauchers mittels einer Schaltventileinrichtung im Fahrbetrieb mit einem Behälter und im Bremsbetrieb mit der Eingangsseite des hydraulischen Aggregats in Verbindung bringbar. Durch die Steuerventileinrichtung wird hierbei auf einfache Weise eine Steuerung der Zulaufseite des Verbrauchers während einer Vorwärtsfahrt oder einer Rückwärtsfahrt ermöglicht. Durch die Schaltventileinrichtung kann auf einfache Weise zwischen einem Betrieb des Verbrauchers im offenen Kreislauf während eines Fahrbetriebs und einer im Bremsbetrieb wirksamen Stellung umgeschaltet werden, in der die Ablaufseite des Verbrauchers mit der Eingangsseite des hydraulischen Aggregats in Verbindung steht und eine Energierückgewinnung ermöglicht wird.

In einer bevorzugten Ausführungsform der Erfindung ist vorgesehen, dass die Ausgangsseite des hydraulischen Aggregats mittels einer Druckmittelleitung mit der Zulaufseite und mittels einer Druckmittelleitung mit der Ablaufseite des Verbrauchers in Verbindung steht, wobei die Steuerventileinrichtung von in den Druckmittelleitungen angeordneten Steuerventilen gebildet ist. Durch die Steuerventile in den Druckmittelieitungen kann die Zulaufseite des Verbrauchers während einer Vorwärtsfahrt oder einer Rückwärtsfahrt auf einfache Weise gesteuert werden.

Gemäß einer vorteilhaften Weiterbildung der Erfindung ist vorgesehen, dass zwischen dem Steuerventil und dem Verbraucher von der Druckmittelleitung eine Zweigleitung abzweigt, die zu einem Behälter geführt ist, wobei in den Zweigleitungen die Schaltventileinrichtung angeordnet ist. Hierdurch kann auf einfache Weise eine Verbindung der Ablaufseite des Verbrauchers mit dem Behälter hergestellt werden.

Besondere Vorteile ergeben sich, wenn die Schaltventileinrichtung von jeweils einem in der Zweigleitung angeordnetem Schaltventil gebildet ist, das im Fahrbetrieb die Zweigleitung mit dem Behälter verbindet und im Bremsbetrieb die Zweigleitung absperrt, wobei im Bremsbetrieb mittels des Steuerventils die mit der Ablaufseite des Verbrauchers in Verbindung stehende Druckmittelleitung mit der Eingangsseite des hydraulischen Aggregats verbindbar ist. Durch das Schaltventil kann somit auf einfache Weise die jeweilige ablaufseitige Druckmittelleitung des Verbrauchers im Fahrbetrieb, beispielsweise während einer Vorwärtsfahrt oder einer Rückwärtsfahrt, mit dem Behälter verbunden werden und im Bremsbetrieb abgesperrt werden, wobei die ablaufseitige Druckmittelleitung über das der ablaufseitigen Druckmittelleitung zugeordnete Steuerventil mit der Eingangsseite des hydraulischen Aggregats in Verbindung steht. Mittels des Schaltventils kann somit auf einfache Weise während eines Bremsbetriebs die Verbindung der Ablaufseite des Verbrauchers mit dem Behälter gesperrt werden, wobei mittels des Steuerventils die Ablaufseite des Verbrauchers mit der Eingangsseite des hydraulischen Aggregats verbunden wird, wodurch eine Energierückgewinnung im Bremsbetrieb ermöglicht wird.

Zweckmäßigerweise ist das Steuerventil als proportionales Sitzventil ausgebildet, das eingangsseitig an den mit dem hydraulische Aggregat in Verbindung stehenden Abschnitt der Druckmittelleitung angeschlossen ist und ausgangsseitig mit dem mit dem Verbraucher in Verbindung stehenden Abschnitt der Druckmittelleitung sowie einer zu der Eingangsseite des hydraulischen Aggregats geführten Leitung in Verbindung steht, wobei in Sperrstellung des Steuerventils der mit dem Verbraucher in Verbindung stehende Abschnitt der Druckmittelleitung mit der Leitung in Verbindung steht. Mit einem proportionalem Sitzventil kann auf einfache Weise in der Neutralstellung der Verbraucher abgesperrt werden und im Fahrbetrieb sowie im Bremsbetrieb die Zulaufseite des Verbrauchers gesteuert werden. Durch die ausgangsseitige Verbindung des mit dem Verbraucher in Verbindung stehenden Abschnitts der Druckmittelleitung mit der Eingangsseite des hydraulischen Aggregats mittels des in Sperrstellung befindlichem Steuerventils kann im Bremsbetrieb auf einfache Weise über das der Ablaufseite des Verbrauchers zugeordnete Steuerventil eine Verbindung der Ablaufseite des Verbrauchers mit der Eingangsseite des hydraulischen Aggregats hergestellt werden.

Sofern in der zur der Eingangsseite des hydraulischen Aggregats geführten Leitung ein in Richtung zur Eingangsseite des hydraulischen Aggregats öffnendes Sperrventil angeordnet ist, kann im Bremsbetrieb ein Druckmittelstrom von der Ablaufseite des Verbrauchers zur Zulaufseite des Verbrauchers über das der Zulaufseite zugeordnete Steuerventil auf einfache Weise verhindert werden. Dadurch wird auf einfache Weise erzielt, dass im Bremsbetrieb das der Ablaufseite des Verbrauchers abströmende Druckmittel zur Eingangsseite des hydraulischen Aggregats strömt, wodurch eine Energierückgewinnung ermöglicht wird. Zudem wird durch das Sperrventil verhindert, dass im Fahrbetrieb ein Kurzschluss der Zulaufseite mit der Ablaufseite des Verbrauchers auftritt.

Gemäß einer vorteilhaften Weiterbildung der Erfindung ist der Leitung eine Absicherungseinrichtung, insbesondere ein Druckbegrenzungsventil, zugeordnet. Durch ein Druckbegrenzungsventil kann mit geringem Aufwand im Bremsbetrieb der maximale Bremsdruck abgesichert werden.

Zweckmäßigerweise ist in der zu der Eingangsseite des hydraulischen Aggregats geführten Leitung ein Ventil angeordnet, das im Fahrbetrieb in eine Sperrstellung und im Bremsbetrieb in eine Durchflussstellung beaufschlagbar ist. Durch das Ventil wird im Fahrbetrieb eine Verbindung der Zulaufseite des Verbrauchers mit der Eingangsseite des hydraulischen Aggregats verhindert. Im Bremsbetrieb wird durch das geöffnete Ventil auf einfache Weise die Ablaufseite des Verbrauchers mit der Eingangsseite des hydraulischen Aggregats verbunden.

Das Ventil kann als Schaltventil ausgebildet sein. Besondere Vorteile ergeben sich, wenn das Ventil als Proportionalventil ausgebildet ist. Mit einem Proportionalventil kann mit geringem Aufwand die Ablaufseite des Verbrauchers gesteuert werden und beispielsweise eine Bremsrampe oder eine Verzögerung der Arbeitsmaschine eingestellt werden.

Zweckmäßigerweise ist in der an die Eingangsseite des hydraulischen Aggregats geführten Saugleitung, die mit dem Behälter in Verbindung steht, zwischen dem Anschluss der Leitung und dem Behälter ein in Richtung zum hydraulischen Aggregat öffnendes Sperrventil angeordnet ist. Durch das Sperrventil wird auf einfache Weise im Bremsbetrieb eine Verbindung der von dem Steuerventil ausgehenden Leitung mit dem Behälter verhindert und somit eine Verbindung der Ablaufseite des Verbrauchers mit der Eingangsseite des hydraulischen Aggregats sichergestellt.

Gemäß einer vorteilhaften Ausführungsform der Erfindung ist das Schaltventil als Sitzventil ausgebildet, das eingangsseitig an den mit der Druckmittelleitung in Verbindung stehenden Abschnitt der Zweigleitung und ausgangsseitig an den mit dem Behälter in Verbindung stehenden Abschnitt der Zweigleitung angeschlossen ist. Mit einem derartigen Schaltventil kann im Fahrbetrieb bei geöffnetem Schaltventil eine Verbindung der Ablaufseite des Verbrauchers mit dem Behälter hergestellt werden und im Bremsbetrieb bei in Sperrstellung beaufschlagtem Schaltventil die Verbindung der Ablaufseite des Verbrauchers mit dem Behälter gesperrt werden.

In einer Weiterbildung der Erfindung ist vorgesehen, dass das Schaltventil ausgangsseitig mittels einer Nachsaugeleitung mit der Druckmittelleitung zwischen dem Steuerventil und dem Verbraucher in Verbindung steht, wobei in der Nachsaugeleitung ein in Richtung zur Druckmittelleitung öffnendes Nachsaugeventil angeordnet ist. Hierdurch kann auf einfache Weise eine Verbindung der Zulaufseite des Verbrauchers mit dem Behälter hergestellt werden, wodurch ein Füllungsmangel an der Zulaufseite des Verbrauchers wirksam vermieden werden kann.

Eine einfache Steuerung des Fahrantriebs im Fahrantrieb ergibt sich hierbei, wenn das der Zulaufseite des Verbrauchers zugeordnete Steuerventil in Abhängigkeit von einer Sollwertvorgabeeinrichtung in eine Durchflussstellung und das der Ablaufseite des Verbrauchers zugeordnete Schaltventil in eine Durchflussstellung beaufschlagt ist, wobei das der Zulaufseite des Verbrauchers zugeordnete Schaltventil und das der Ablaufseite des Verbrauchers zugeordnete Steuerventil in eine Sperrstellung beaufschlagt sind. Druckmittel kann somit über das Steuerventil zur Zulaufseite des Verbrauchers strömen, wobei mittels des Steuerventils die Zulaufseite des Verbrauchers steuerbar ist. Die Ablaufseite des Verbrauchers steht über das aufgesteuerte Schaltventil mit dem Behälter in Verbindung.

Im Bremsbetrieb ergibt sich eine einfache Steuerung, wenn das der Ablaufseite des Verbrauchers zugeordnete Schaltventil in eine Sperrstellung beaufschlagbar ist, wobei das in der zur Eingangsseite des hydraulischen Aggregats geführten Leitung angeordnete Ventil in die Durchflussstellung beaufschlagbar ist. Druckmittel strömt somit im Bremsbetrieb von der Ablaufseite des Verbrauchers über das der Ablaufseite zugeordnete Steuerventil, das in der Sperrstellung die Druckmittelleitung mit der zur Eingangsseite des hydraulischen Aggregats führenden Leitung verbindet, und das geöffnete Ventil zur Eingangsseite des hydraulischen Aggregats, das als Motor arbeitet, die als Generator betriebene elektrische Maschine antreibt und elektrische Energie in die Batterie zurückspeist. Durch entsprechende Ansteuerung des Ventils kann hierbei die Verzögerung oder Bremsrampe der Arbeitsmaschine eingestellt werden.

Gemäß einer bevorzugten Ausführungsform ist das der Ablaufseite des Verbrauchers zugeordnete Schaltventil und/oder das in der Leitung angeordnete Ventil in Abhängigkeit von einer Sollwertvorgabeeinrichtung ansteuerbar. Durch die Steuerung des der Ablaufseite des Verbrauchers zugeordneten Schaltventil bzw. des der Eingangseite des hydraulischen Aggregats zugeordneten Ventils ist Abhängigkeit von der Stellung einer Sollwertvorgabeeinrichtung, beispielsweise eines Fahrpedals, kann auf einfache Weise, beispielsweise bei Zurücknahme des Fahrpedals, ein Bremsbetrieb erkannt werden und das Schaltventil von der Öffnungsstellung in die Sperrstellung bzw. das Ventil in eine Durchflussstellung beaufschlagt werden.

Sofern gemäß einer Weiterbildung der Erfindung das der Ablaufseite des Verbrauchers zugeordnete Schaltventil und/oder das in der Leitung angeordnete Ventil in Abhängigkeit von der Fahrgeschwindigkeit der Arbeitsmaschine ansteuerbar ist, kann auf einfache Weise eine Grenzgeschwindigkeit vorgebeben werden, ab der eine Energierückgewinnung ermöglicht werden soll.

Die elektrische Maschine kann als im Fahrbetrieb als Motor und im Bremsbetrieb als Generator betreibbare Gleichstrommaschine ausgebildet sein. Besondere Vorteile ergeben sich, wenn die elektrische Maschine als im Fahrbetrieb als Motor und im Bremsbetrieb als Generator betreibbare Asynchronmaschine ausgebildet ist. Mit einer Asynchronmaschine ergibt sich im Bremsbetrieb der Arbeitsmaschine eine automatische Rückspeisung von elektrischer Energie in die Batterie, wodurch eine Energierückgewinnung im Bremsbetrieb mit geringem Aufwand ermöglicht wird.

Weitere Vorteile und Einzelheiten der Erfindung werden anhand des in der schematischen Figur dargestellten Ausführungsbeispiels näher erläutert.

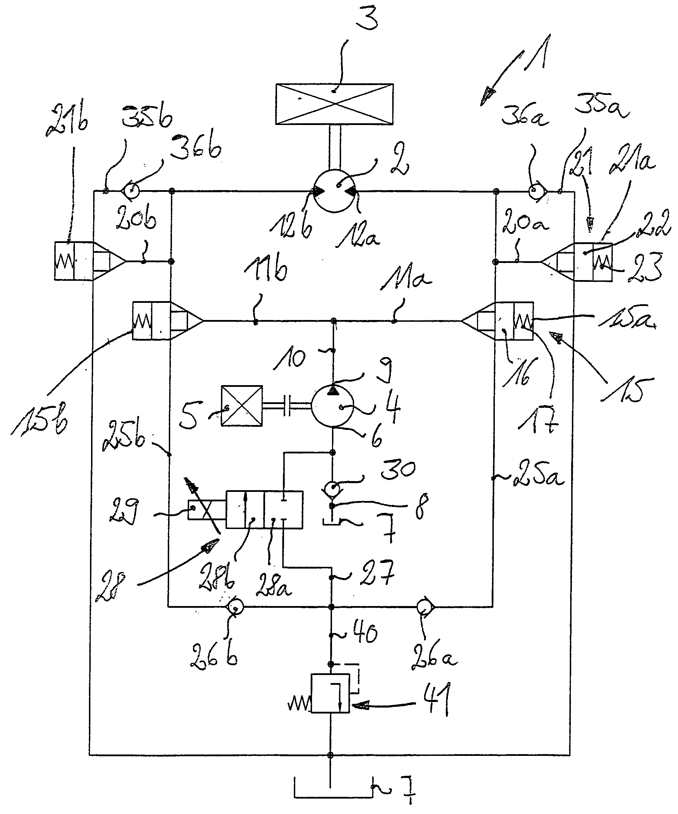

In der Figur ist ein hydrostatischer Fahrantrieb 1 einer beispielsweise als Flurförderzeug ausgebildeten Arbeitsmaschine gezeigt. Der Fahrantrieb 1 weist einen rotatorischen Verbraucher 2, beispielsweise ein Motor, auf, der mit einem Antriebsrad 3 der Arbeitsmaschine in trieblicher Verbindung steht. Der Verbraucher 2 ist im offenen Kreislauf an ein hydraulisches Aggregat 4 angeschlossen, das mit einer elektrischen Maschine 5 in trieblicher Verbindung steht. Die elektrische Maschine 5 steht zur Versorgung mit elektrischer Energie mit einer nicht mehr dargestellten Batterie in Verbindung.

Das hydraulische Aggregat 4 weist eine Eingangsseite 6 auf, an die eine zu einem Behälter 7 geführte Saugleitung 8 angeschlossen ist. An eine Ausgangsseite 9 des hydraulischen Aggregats 4 ist eine Druckmittelleitung 10 angeschlossen, die in zwei Druckmittelleitungen 11a, 11b verzweigt. Die Druckmittelleitung 11a ist an eine Seite 12a des Verbrauchers 2 und die Druckmittelleitung 11b an eine Seite 12b des Verbrauchers 2 angeschlossen. In einer Stellung für die Vorwärtsfahrt bildet hierbei die Seite 12a die Zulaufseite und die Seite 12b die Ablaufseite des Verbrauchers 2. Entsprechend bildet in einer Stellung für die Rückwärtsfahrt die Seite 12b die Zulaufseite und die Seite 12a die Ablaufseite des Verbrauchers 2.

Zur Steuerung der Zulaufseite des Verbrauchers 2 ist eine Steuerventileinrichtung 15 vorgesehen, die jeweils ein in den Druckmittelleitungen 11a, 11b angeordnetes Steuerventil 15a, 15b aufweist. Die Steuerventile 15a, 15b sind als proportionale Sitzventile ausgebildet. Eingangsseitig ist das Steuerventil 15a, 15b an den mit dem hydraulischen Aggregat 4 in Verbindung stehenden Abschnitt der Druckmittelleitung 11a, 11b angeschlossen. Ausgangsseitig steht das Steuerventil 15a, 15b mit dem mit dem Verbraucher 2 in Verbindung stehenden Abschnitt der Druckmittelleitung 11a, 11b in Verbindung. Das Steuerventil 15a bzw. 15b weist hierbei jeweils einen einen Ventilsitz ansteuernden Ventilkörper 16 auf, der mittels einer Feder 17 und einer nicht mehr dargestellten Betätigungseinrichtung, beispielsweise einem Proportionalmagneten, in eine die Druckmittelleitung 11a, 11b absperrende Sperrstellung beaufschlagbar ist.

Von der Druckmittelleitung 11a, 11b zweigt zwischen dem Steuerventil 15a, 15b und dem Verbraucher 2 jeweils eine Zweigleitung 20a, 20b ab, die unter Zwischenschaltung einer Schaltventileinrichtung 21 an den Behälter 7 geführt ist. Die Schaltventileinrichtung 21 weist hierbei jeweils ein in der Zweigleitung 20a, 20b angeordnetes Schaltventil 21a, 21b auf. Das Schaltventil 21a, 21b ist hierbei eingangsseitig an den mit der Druckmittelleitung 11a, 11b in Verbindung stehenden Abschnitt der Zweigleitung 20a, 20b angeschlossen. Ausgangsseitig steht das Schaltventil 21a, 21b mit dem an den Behälter 7 geführten Abschnitt der Zweigleitung 20a, 20b in Verbindung. Das Schaltventil 21a, 21b ist hierbei als Sitzventil ausgebildet und weist jeweils einen einen Ventilsitz ansteuernden Ventilkörper 22 auf, der in Richtung einer die Zweigleitung 20a, 20b absperrenden Sperrstellung von einer Feder 23 und einer nicht mehr dargestellten Betätigungseinrichtung, beispielsweise einem Schaltmagnet, beaufschlagbar ist.

Das Steuerventil 15a bzw. 15b steht ausgangsseitig mit jeweils einer Leitung 25a bzw. 25b in Verbindung, die unter Zwischenschaltung eines Sperrventils 26a bzw. 26b an eine Leitung 27 angeschlossen ist, die zur Saugleitung 8 des hydraulischen Aggregats geführt ist. In der Leitung 27 ist ein Ventil 28 angeordnet, das eine Sperrstellung 28a und eine Durchflussstellung 28b aufweist. Das Ventil 28 befindet sich hierbei normalerweise in der Sperrstellung 28a und kann durch Ansteuerung einer Betätigungseinrichtung 29, beispielsweise einem Schaltmagnet oder einem Proportionalmagnet, in Richtung der Durchflussstellung 28b beaufschlagt werden. In der Saugleitung 8 ist zwischen dem Behälter 7 und dem Anschluss der Leitung 27 ein in Richtung zur Eingangsseite des hydraulischen Aggregats 4 öffnendes Rückschlagventil 30 angeordnet.

Das Schaltventil 21a bzw. 21b steht ausgangsseitig mittels einer Nachsaugeleitung 35a bzw. 35b mit der Druckmittelleitung 11a bzw. 11b in Verbindung, wobei in der Nachsaugeleitung 35a, 35b jeweils ein in Richtung zur Druckmittelleitung 11a, 11b öffnendes, als Rückschlagventil ausgebildetes Nachsaugeventil 36a, 36b angeordnet ist.

Mit den Leitungen 25a, 25b bzw. der Leitung 27 steht eine zum Behälter 7 geführte Leitung 40 in Verbindung, in der eine Absicherungseinrichtung 41, beispielsweise ein Druckbegrenzungsventil, angeordnet ist.

In der dargestellten Neutralstellung des Fahrantriebs befinden sich die Steuerventile 15a, 15b und die Schaltventile 21a, 21b durch die Fedem 17 bzw. 23 und durch eine Ansteuerung der jeweiligen Betätigungseinrichtungen in der dargestellten Sperrstellung. Die Druckmittelleitungen 11a, 11b und die Zweigleitungen 20a, 20b sind somit abgesperrt, wodurch der Verbraucher 2 hydraulisch blockiert ist und die Arbeitsmaschine gegen unbeabsichtigtes Wegrollen gesichert ist. Das Ventil 28 befindet sich in der Sperrstellung 28a.

In einer Stellung für die Vorwärtsfahrt wird durch eine Ansteuerung der Betätigungseinrichtung des Steuerventils 15a in Abhängigkeit von der Betätigung einer Sollwertvorgabeeinrichtung, beispielsweise eines Fahrpedals, das Steuerventil 15a in eine Durchflussstellung aufgesteuert. Gleichzeitig wird durch eine Ansteuerung der Betätigungseinrichtung des Schaltventils 21b das Schaltventil 21b in die Durchflussstellung aufgesteuert. Die elektrische Maschine 5 wird mittels einer Drehzahlregeleinrichtung in Abhängigkeit von der Betätigung der Sollwertvorgabeeinrichtung mit einer derartigen Drehzahl betrieben, dass ein Druckmittelstrom in der Druckmittelleitung 10 erzeugt wird, um die Arbeitsmaschine mit der vorgegebenen Fahrgeschwindigkeit zu betreiben. Druckmittel strömt somit von dem als Pumpe arbeitenden hydraulischen Aggregat 4 über die Druckmittelleitung 10, die Druckmittelleitung 11a, das in Öffnungsstellung beaufschlagte Steuerventil 15a zu der die Zulaufseite bildenden Seite 12a des Verbrauchers 2. Die die Ablaufseite des Verbrauchers 2 bildende Seite 12b steht über die Druckmittelleitung 11b, die Zweigleitung 20b und das in die Öffnungsstellung beaufschlagte Schaltventil 21b mit dem Behälter 7 in Verbindung, wodurch Druckmittel von der Ablaufseite 12b des Verbrauchers 2 zum Behälter 7 abströmt. Sofern von dem hydraulischen Aggregat 4 weitere Verbraucher der Arbeitsmaschine, beispielsweise eine Hubeinrichtung, mit Druckmittel versorgt werden, kann hierbei das Steuerventil 15a bei alleiniger Ansteuerung des Fahrantriebs derart aufgesteuert sein, dass am Steuerventil 15a keine Drosselverluste auftreten. Sofern ein weiterer Verbraucher, beispielsweise die Hubvorrichtung, angesteuert wird und das hydraulische Aggregat 4 einen zusätzlichen Druckmittelstrom liefert, wird das Steuerventil 15a in eine Drosselstellung beaufschlagt, um zu erzielen, dass dem Fahrantrieb 1 die angeforderte Druckmittelmenge zuströmt.

Durch das in der Sperrstellung 28a befindliche Ventil 28 und das Rückschlagventil 26b wird hierbei ein Druckmittelstrom von der Zulaufseite des Verbrauchers 2 zur Eingangsseite des hydraulischen Aggregats bzw. zur Ablaufseite des Verbrauchers 2 verhindert.

In einer Stellung für die Vorwärtsfahrt sind das Schaltventil 21a und das Steuerventil 15b weiterhin in die Sperrstellung beaufschlagt.

Gelangt die Arbeitsmaschine beispielsweise durch Zurücknahme der Sollwertvorgabeeinrichtung oder während einer Bergabfahrt in einen Bremsbetrieb, drehen sich die Druckverhältnisse in den Druckmittelleitungen 11a, 11b um. Der Verbraucher 2 arbeitet als Pumpe und fördert Druckmittel von der zulaufseitigen Druckmittelleitung 11a in die ablaufseitige Druckmittelleitung 11b. Im Bremsbetrieb wird durch eine entsprechende Ansteuerung der Betätigungseinrichtung des Schaltventils 21b das Schaltventil 21b in die Sperrstellung beaufschlagt und gleichzeitig das Ventil 28 durch Ansteuerung der Betätigungseinrichtung 29 in die Durchflussstellung 28b beaufschlagt. Das vom Verbraucher 2 in der Druckmittelleitung 11b abströmende Druckmittel strömt somit über das in der Sperrstellung befindliche Steuerventil 15b in die Leitung 25b, die über das geöffnete Sperrventil 26b, die Leitung 27, das in die Durchflussstellung 28b aufgesteuerte Ventil 28 mit der Saugleitung 8 des hydraulischen Aggregats 4 in Verbindung steht. Das hydraulische Aggregat 4 wird hierbei durch das von der Ablaufseite 12b des Verbrauchers 2 abströmende Druckmittel angetrieben und arbeitet als Motor, der die als Generator arbeitende elektrische Maschine 5 antreibt. Die elektrische Maschine 5 speist hierbei elektrische Energie während des Bremsbetriebs in die Batterie zurück.

Das Rückschlagventil 26a verhindert hierbei im Bremsbetrieb einen Druckmittelstrom von der Leitung 25b in die Leitung 25a. Durch die Absicherungseinrichtung 41 kann der maximale Bremsdruck abgesichert werden. Ein Druckmittelmangel an der Zulaufseite 12a des Verbrauchers kann hierbei durch das Nachsaugeventil 36a verhindert werden, das eine Verbindung der zulaufseitigen Druckmittelleitung 11a über die Nachsaugeleitung 35a und das in der Sperrstellung befindliche Schaltventil 21a mit dem Behälter 7 ermöglicht.

Durch entsprechende Ansteuerung des Ventils 28 kann hierbei eine Bremsverzögerung der Arbeitsmaschine vorgegeben werden.

Entsprechend wird bei einer Stellung für die Rückwärtsfahrt durch eine Ansteuerung der Betätigungseinrichtung des Steuerventils 15b in Abhängigkeit von der Sollwertvorgabeeinrichtung das Steuerventil 15b und durch eine Ansteuerung der Betätigungseinrichtung des Schaltventils 21a das Schaltventil 21a in eine Öffnungsstellung aufgesteuert. Gelangt die Arbeitsmaschine während einer Rückwärtsfahrt in den Bremsbetrieb, wird das Schaltventil 21a in die Sperrstellung beaufschlagt und das Ventil 28 durch eine Ansteuerung der Betätigungseinrichtung 29 in die Durchflussstellung beaufschlagt, wodurch von der die Ablaufseite des Verbrauchers 2 bildenden Seite 12a Druckmittel über die Druckmittelleitung 11a, die Leitung 25a, das geöffnete Sperrventil 26a, die Leitung 27 und das in die Öffnungsstellung aufgesteuerte Ventil 28 zur Saugleitung 8 des als Motor betriebenen Aggregats 4 strömen kann, das die als Generator betriebene elektrische Maschine 5 antreibt.

## Patentansprüche

1. Hydrostatischer Fahrantrieb für eine batterie-elektrisch betriebene Arbeitsmaschine, insbesondere Flurförderzeug, mit zumindest einem mit einem Antriebsrad der Arbeitsmaschine in Wirkverbindung stehenden rotatorischen Verbraucher, der im offenen Kreislauf mit einem hydraulischen Aggregat in Verbindung steht, wobei das hydraulische Aggregat mit einer elektrischen Maschine in trieblicher Verbindung steht, **dadurch gekennzeichnet, dass** im Bremsbetrieb des Fahrantriebs (1) die Ablaufseite (12a; 12b) des Verbrauchers (2) mit der Eingangsseite (6) des hydraulischen Aggregats (4) in Verbindung bringbar ist, wobei die elektrische Maschine (5) als Generator betreibbar ist.

2. Hydrostatischer Fahrantrieb nach Anspruch 1, **dadurch gekennzeichnet, dass** die Ausgangsseite (9) des hydraulischen Aggregats (4) mittels einer Steuerventileinrichtung (15) mit der Zulaufseite (12a; 12b) des Verbrauchers (2) in Verbindung bringbar ist und die Ablaufseite (12b; 12a) des Verbrauchers (2) mittels einer Schaltventileinrichtung (21) im Fahrbetrieb mit einem Behälter (7) und im Bremsbetrieb mit der Eingangsseite (6) des hydraulischen Aggregats (4) in Verbindung bringbar ist.

3. Hydrostatischer Fahrantrieb nach Anspruch 2, **dadurch gekennzeichnet, dass** die Ausgangsseite (9) des hydraulischen Aggregats (4) mittels einer Druckmittelleitung (11a; 11b) mit der Zulaufseite (12a; 12b) und mittels einer Druckmittelleitung (11b; 11a) mit der Ablaufseite (12b; 12a) des Verbrauchers (2) in Verbindung steht, wobei die Steuerventileinrichtung (15) von in den Druckmittelleitungen (11a, 11b) angeordneten Steuerventilen (15a, 15b) gebildet ist.

4. Hydrostatischer Fahrantrieb nach Anspruch 3, **dadurch gekennzeichnet, dass** zwischen dem Steuerventil (15a; 15b) und dem Verbraucher (2) von der Druckmittelleitung (11 a; 11b) eine Zweigleitung (20a; 20b) abzweigt, die zu einem Behälter (7) geführt ist, wobei in den Zweigleitungen (20a; 20b) die Schaltventileinrichtung (21) angeordnet ist.

5. Hydrostatischer Fahrantrieb nach Anspruch 4, **dadurch gekennzeichnet, dass** die Schaltventileinrichtung (21) von jeweils einem in der Zweigleitung (20a; 20b) angeordnetem Schaltventil (21a; 21b) gebildet ist, das im Fahrbetrieb die Zweigleitung (20a; 20b) mit dem Behälter (7) verbindet und im Bremsbetrieb die Zweigleitung (20a; 20b) absperrt, wobei im Bremsbetrieb mittels des Steuerventils (15a; 15b) die mit der Ablaufseite (12a; 12b) des Verbrauchers (2) in Verbindung stehende Druckmittelleitung (11a; 11b) mit der Eingangsseite (6) des hydraulischen Aggregats (4) verbindbar ist.

6. Hydrostatischer Fahrantrieb nach Anspruch 3 bis 5, **dadurch gekennzeichnet, dass** das Steuerventil (15a; 15b) als proportionales Sitzventil ausgebildet ist, das eingangsseitig an den mit dem hydraulische Aggregat (4) in Verbindung stehenden Abschnitt der Druckmittelleitung (11a; 11b) angeschlossen ist und ausgangsseitig mit dem mit dem Verbraucher (2) in Verbindung stehenden Abschnitt der Druckmittelleitung (11a; 11b) sowie einer zu der Eingangsseite (6) des hydraulischen Aggregats (4) geführten Leitung (25a; 25) in Verbindung steht, wobei in Sperrstellung des Steuerventils (15a; 15b) der mit dem Verbraucher (2) in Verbindung stehende Abschnitt der Druckmittelleitung (11a; 11b) mit der Leitung (25a; 25b) in Verbindung steht.

7. Hydrostatischer Fahrantrieb nach Anspruch 6, **dadurch gekennzeichnet, dass** in der zur der Eingangsseite (6) des hydraulischen Aggregats (4) geführten Leitung (25a; 25b) ein in Richtung zur Eingangsseite (6) des hydraulischen Aggregats (4) öffnendes Sperrventil (26a; 26b) angeordnet ist.

8. Hydrostatischer Fahrantrieb nach Anspruch 6 oder 7, **dadurch gekennzeichnet, dass** der Leitung (25a; 25b) eine Absicherungseinrichtung (41), insbesondere ein Druckbegrenzungsventil, zugeordnet ist.

9. Hydrostatischer Fahrantrieb nach einem der Ansprüche 6 bis 8, **dadurch gekennzeichnet, dass** in der zu der Eingangsseite (6) des hydraulischen Aggregats (4) geführten Leitung (25a; 25b) ein Ventil (28) angeordnet ist, das im Fahrbetrieb in eine Sperrstellung (28a) und im Bremsbetrieb in eine Durchflussstellung (28b) beaufschlagbar ist.

10. Hydrostatischer Fahrantrieb nach Anspruch 9, **dadurch gekennzeichnet, dass** das Ventil (28) als Proportionalventil ausgebildet ist.

11. Hydrostatischer Fahrantrieb nach einem der Ansprüche 6 bis 10, **dadurch gekennzeichnet, dass** in der an die Eingangsseite (6) des hydraulischen Aggregats (4) geführten Saugleitung (8), die mit dem Behälter (7) in Verbindung steht, zwischen dem Anschluss der Leitung (25a; 25b) und dem Behälter (7) ein in Richtung zum hydraulischen Aggregat (4) öffnendes Sperrventil (30) angeordnet ist.

12. Hydrostatischer Fahrantrieb nach einem der Ansprüche 5 bis 11, **dadurch gekennzeichnet, dass** das Schaltventil (21a; 21b) als Sitzventil ausgebildet ist, das eingangsseitig an den mit der Druckmittelleitung (11a; 11b) in Verbindung stehenden Abschnitt der Zweigleitung (20a; 20b) und ausgangsseitig an den mit dem Behälter (7) in Verbindung stehenden Abschnitt der Zweigleitung (20a; 20b) angeschlossen ist.

13. Hydrostatischer Fahrantrieb nach einem der Ansprüche 5 bis 12, **dadurch gekennzeichnet, dass** das Schaltventil (21a; 21b) ausgangsseitig mittels einer Nachsaugeleitung (35a; 35b) mit der Druckmittelleitung (11a; 11b) zwischen dem Steuerventil (15a; 15b) und dem Verbraucher (2) in Verbindung steht, wobei in der Nachsaugeleitung (35a; 35b) ein in Richtung zur Druckmittelleitung (11a; 11b) öffnendes Nachsaugeventil (36a; 36b) angeordnet ist.

14. Hydrostatischer Fahrantrieb nach einem der Ansprüche 5 bis 13, **dadurch gekennzeichnet, dass** im Fahrbetrieb das der Zulaufseite (12a; 12b) des Verbrauchers (2) zugeordnete Steuerventil (15a; 15b) in Abhängigkeit von einer Sollwertvorgabeeinrichtung in eine Durchflussstellung und das der Ablaufseite (12b; 12a) des Verbrauchers (2) zugeordnete Schaltventil (21b; 21a) in eine Durchflussstellung beaufschlagt ist, wobei das der Zulaufseite (12a; 12b) des Verbrauchers (2) zugeordnete Schaltventil (21a; 21b) und das der Ablaufseite (12b; 12a) des Verbrauchers (2) zugeordnete Steuerventil (15b; 15a) in eine Sperrstellung beaufschlagt sind.

15. Hydrostatischer Fahrantrieb nach einem der Ansprüche 5 bis 14, **dadurch gekennzeichnet, dass** im Bremsbetrieb das der Ablaufseite (12b; 12a) des Verbrauchers (2) zugeordnete Schaltventil (21b; 21a) in eine Sperrstellung beaufschlagbar ist, wobei das in der zur Eingangsseite (6) des hydraulischen Aggregats (4) geführten Leitung (25a; 25b) angeordnete Ventil (28) in die Durchflussstellung (28b) beaufschlagbar ist.

16. Hydrostatischer Fahrantrieb nach einem der Ansprüche 5 bis 15, **dadurch gekennzeichnet, dass** das der Ablaufseite (12b; 12a) des Verbrauchers (2) zugeordnete Schaltventil (21b; 21a) und/oder das in der Leitung (25a; 25b) angeordnete Ventil (28) in Abhängigkeit von einer Sollwertvorgabeeinrichtung ansteuerbar ist.

17. Hydrostatischer Fahrantrieb nach einem der Ansprüche 5 bis 15, **dadurch gekennzeichnet, dass** das der Ablaufseite (12b; 12a) des Verbrauchers (2) zugeordnete Schaltventil (21b; 21a) und/oder das in der Leitung (25a; 25b) angeordnete Ventil (28) in Abhängigkeit von der Fahrgeschwindigkeit der Arbeitsmaschine ansteuerbar ist.

18. Hydrostatischer Fahrantrieb nach einem der Ansprüche 1 bis 17, **dadurch gekennzeichnet, dass** die elektrische Maschine (4) als im Fahrbetrieb als Motor und im Bremsbetrieb als Generator betreibbare Gleichstrommaschine ausgebildet ist.

19. Hydrostatischer Fahrantrieb nach einem der Ansprüche 1 bis 17, **dadurch gekennzeichnet, dass** die elektrische Maschine (4) als im Fahrbetrieb als Motor und im Bremsbetrieb als Generator betreibbare Asynchronmaschine ausgebildet ist.
